# EUROPÄISCHE PATENTANMELDUNG

(11) **EP 3 699 934 A1**
(43) Veröffentlichungstag der Anmeldung: **26.08.2020**
(21) Anmeldenummer: 19158570.2
(22) Anmeldetag: 21.02.2019
(51) Int. Cl.: H01B 17/26, H02B 13/00, H01R 13/53, H02G 3/22, H01F 27/04, H02K 5/22

(54) **ELEKTRISCHE DURCHFÜHRUNG FÜR EIN DRUCKGEHÄUSE**

(71) Anmelder: Siemens Aktiengesellschaft, 80333 München (DE)
(72) Erfinder: Burghard, Matthias Johannes, 12099 Berlin (DE); Festa, Marco, 14612 Falkensee (DE); Vogeley, Peter, 14612 Falkensee (DE); Hardeweg, Johannes, 10997 Berlin (DE)

(57) **Zusammenfassung**

Die Erfindung betrifft eine elektrische Durchführung (1) für ein Druckgehäuse (3). Die elektrische Durchführung (1) umfasst zwei Durchführungselemente (5, 6), die jeweils gerade entlang einer Elementachse (5.1, 6.1) zwischen einem ersten Elementendabschnitt (5.2, 6.2) und einem zweiten Elementendabschnitt (5.3, 6.3) verlaufen und deren äußere Form und Abmessungen im Wesentlichen übereinstimmen, und ein Verbindungselement (8), das an sich gegenüberliegenden Seiten jeweils mit einem Durchführungselement (5, 6) lösbar verbunden ist. Das Verbindungselement (8) weist mindestens einen elektrischen Verbindungsleiter (25) auf und mindestens ein Durchführungselement (5, 6) weist für jeden Verbindungsleiter (25) einen elektrischen Durchführungsleiter (22) auf, der entlang der Elementachse (5.1, 6.1) des Durchführungselements (5, 6) verläuft und an dem Verbindungsleiter (25) anliegt.

## Beschreibung

Die Erfindung betrifft eine elektrische Durchführung für ein Druckgehäuse, eine Maschinenanordnung mit einer in einem Druckgehäuse angeordneten elektrischen Maschine und ein Verfahren zur Herstellung einer derartigen Maschinenanordnung.

Um eine in einem Gehäuse angeordnete elektrische Maschine mit einer außerhalb des Gehäuses angeordneten Energiequelle mit elektrischer Energie zu versorgen, wird eine elektrische Durchführung durch das Gehäuse benötigt. Eine derartige Durchführung ist für die Leitung der geforderten Stromstärke ausgelegt und für die geforderte elektrische Spannung isoliert. Wenn das Gehäuse ein Druckgehäuse ist, in dem ein von einem Außendruck in einer Umgebung des Druckgehäuses abweichender Druck erzeugt wird, muss die Durchführung außerdem das Druckgehäuse im Bereich des Leiters und der Isolierung gegen die Druckdifferenz zwischen dem Druck in dem Druckgehäuse und dem Außendruck abdichten. Außerdem muss die Durchführung Änderungen der Druckdifferenz überstehen können.

Die elektrische Verbindung einer elektrischen Komponente der elektrischen Maschine mit der Durchführung stellt eine besondere Herausforderung dar, wenn diese Komponente zu Reparatur-, Inspektions- oder Wartungszwecken austauschbar sein soll. Beim axialen Einführen derartiger Komponenten in das Druckgehäuse dürfen keine Teile über den Innendurchmesser des Druckgehäuses hinausragen. Dadurch entsteht die Notwendigkeit mindestens einer elektrischen Verbindungsstelle zwischen der Durchführung und der elektrischen Maschine im Inneren des Druckgehäuses oder alternativ die Notwendigkeit einer flexiblen elektrischen Verbindung. Starre elektrische Verbindungen müssen so dimensioniert sein, dass Fertigungstoleranzen und Bewegungen aufgrund von thermischen Längenausdehnungen berücksichtigt sind. Das ist vor allem bei den Hauptzuleitungen zu großen Elektromotoren problematisch, weil die Hauptzuleitungen nur wenig flexibel sind. Attraktiv ist aus diesem Grund die Verwendung flexibler Verbindungen, die als Kabel ausgebildet sind. Allerdings füllen sich die zwangsläufig vorhandenen Hohlräume zwischen den Einzeldrähten und zwischen Leiter und Isolierung eines derartigen Kabels mit Gas, welches permanent durch den Kabelmantel hindurch diffundiert. Muss der Gasdruck, beispielsweise für eine Reparatur an der elektrischen Maschine oder bei einer Havarie, im Inneren des Druckgehäuses gesenkt werden, expandiert das eingeschlossene Gas und zerstört dabei in der Regel die Kabelisolierung. Dasselbe Problem besteht bei prozessbedingten Druckschwankungen. Dieser Vorgang ist unter dem Begriff "explosive Dekompression" bekannt.

Der Erfindung liegt die Aufgabe zugrunde, eine verbesserte Durchführung für ein Druckgehäuse und eine verbesserte Maschinenanordnung mit einer in einem Druckgehäuse angeordneten elektrischen Maschine anzugeben.

Die Aufgabe wird erfindungsgemäß durch eine elektrische Durchführung mit den Merkmalen des Anspruchs 1, eine Maschinenanordnung mit den Merkmalen des Anspruchs 14 und ein Verfahren zur Herstellung einer Maschinenanordnung mit den Merkmalen des Anspruchs 15 gelöst.

Vorteilhafte Ausgestaltungen der Erfindung sind Gegenstand der abhängigen Ansprüche.

Eine erfindungsgemäße elektrische Durchführung für ein Druckgehäuse umfasst zwei Durchführungselemente und ein Verbindungselement. Die Durchführungselemente verlaufen jeweils gerade entlang einer Elementachse zwischen einem ersten Elementendabschnitt und einem zweiten Elementendabschnitt und stimmen hinsichtlich ihrer äußeren Form und Abmessungen im Wesentlichen überein. Das Verbindungselement ist an sich gegenüberliegenden Seiten mit jeweils einem Durchführungselement lösbar verbunden, wobei jeweils der erste Elementendabschnitt eines Durchführungselements an einer Kontaktfläche des Verbindungselements anliegt. Ferner weist das Verbindungselement mindestens einen elektrischen Verbindungsleiter auf und mindestens ein Durchführungselement weist für jeden Verbindungsleiter einen elektrischen Durchführungsleiter auf, der entlang der Elementachse des Durchführungselements verläuft und in einer Kontaktfläche an dem Verbindungsleiter anliegt. Vorzugsweise sind die Elementachsen der beiden Durchführungselemente wenigstens annähernd kollinear.

Eine erfindungsgemäße Durchführung ist insbesondere dafür vorgesehen, eine elektrische Kontaktierung einer in einem Druckgehäuse angeordneten elektrischen Maschine zu ermöglichen, wobei das Verbindungselement in dem Druckgehäuse angeordnet und mit der elektrischen Maschine verbunden wird und die Durchführungselemente durch Gehäuseöffnungen in das Druckgehäuse geführt werden. Die lösbare Verbindung der Durchführungselemente mit dem Verbindungselement vereinfacht dabei die Montage und Demontage der Durchführung. Insbesondere können zur Reparatur, Wartung oder zum Austausch der elektrischen Maschine zunächst die Durchführungselemente demontiert werden und anschließend die elektrische Maschine dem Druckgehäuse entnommen werden, ohne die Durchführung oder die elektrischen Maschine beschädigen oder zerstören zu müssen. Dadurch, dass die Durchführung zwei Durchführungselemente im Wesentlichen gleicher Form und Abmessungen aufweist, die an sich gegenüberliegenden Seiten mit dem Verbindungselement verbunden sind, kann eine Kompensation der Kräfte erreicht werden, die bei einer Druckdifferenz zwischen einem Druck in dem Gehäuseinneren des Druckgehäuse und einem Druck in der Umgebung des Druckgehäuses auf die Durchführung wirken, insbesondere wenn die Durchführungselemente auf verschiedenen Seiten des Verbindungselements zumindest annähernd kollinear verlaufen. Insbesondere kann dadurch verhindert werden, dass diese Kräfte eine Verschiebung der Durchführung relativ zu dem Druckgehäuse oder entsprechende Spannungen bewirken. Durch die mechanisch starre Ausführung der Durchführung kann ferner das oben genannte Problem der explosiven Dekompression vermieden werden, das bei Durchführungen auftreten kann, bei denen Kabelverbindungen verwendet werden.

Eine Ausgestaltung der Erfindung sieht mindestens ein Verspannelement vor, mit dem die Durchführungselemente mit dem Verbindungselement lösbar verspannt und dadurch lösbar verbunden sind. Beispielsweise ist mindestens ein Verspannelement als eine Zugstange ausgebildet und die Durchführung weist für jede Zugstange eine durch beide Durchführungselemente und das Verbindungselement verlaufende Durchführungsausnehmung auf, in die die Zugstange eingeführt ist, wobei jede Zugstange kraftschlüssig mit einem Durchführungselement verbunden ist. Insbesondere kann mindestens ein Durchführungsleiter als ein Rohr ausgebildet sein, durch das eine Zugstange geführt ist.

Durch Verspannelemente wie eine durch die Durchführungselemente und das Verbindungselement geführte Zugstange kann vorteilhaft insbesondere eine lösbare Verbindung der Durchführungselemente mit dem Verbindungselement realisiert werden, die außerhalb des Druckgehäuses zugänglich ist. Die Führung einer Zugstange durch rohrartig ausgebildete Durchführungsleiter ist besonders zweckmäßig, da die Zugstange dadurch neben ihrer Funktion zum Verspannen der Durchführung auch als Führungselement für die Durchführungsleiter eingesetzt wird.

Eine weitere Ausgestaltung der Erfindung sieht vor, dass jeder Durchführungsleiter elektrisch isoliert in einem Durchführungselement geführt ist. Durch eine geeignet ausgebildete elektrische Isolierung der Durchführungsleiter kann nicht nur die elektrische Sicherheit der Durchführung erhöht werden, sondern es kann auch die Gasdichtheit der Durchführung verbessert werden.

Bei einer weiteren Ausgestaltung der Erfindung weist jedes Durchführungselement, das mindestens einen Durchführungsleiter aufweist, ein Mantelrohr auf, in dem der mindestens eine Durchführungsleiter geführt ist. Dabei kann jedes Mantelrohr eines Durchführungselements mindestens eine ringförmig um die Elementachse des Durchführungselements verlaufende Mantelrohrsicke aufweisen, durch die der Innendurchmesser des Querschnitts des Mantelrohrs lokal verkleinert ist, um die Dichtheit des Durchführungselements gegen Gasströmungen in dem Durchführungselement zu erhöhen. Durch ein Mantelrohr kann ein Durchführungselement wirksam gegen mechanische und/oder chemische Beeinträchtigungen geschützt werden. Beispielsweise wird dazu ein Mantelrohr aus einem korrosionsbeständigen Stahl verwendet.

Bei einer weiteren Ausgestaltung der Erfindung sind Endflächen der ersten Elementendabschnitte der Durchführungselemente und die Kontaktflächen des Verbindungselements derart gestaltet, dass jede Endfläche flächig an einer Kontaktfläche anliegt. Insbesondere können die Endflächen und die Kontaktflächen derart gestaltet sein, dass jedes Durchführungselement bei einem flächigen Kontakt der Endfläche mit einer Kontaktfläche um mindestens eine zu der Elementachse senkrechte Achse relativ zu dem Verbindungselement schwenkbar ist.

Durch ein flächiges Anliegen der Endfläche eines Durchführungselements an einer Kontaktfläche des Verbindungsleiters kann einerseits ein guter elektrischer Kontakt zwischen einem Durchführungsleiter des Durchführungselements und einem Verbindungsleiter des Verbindungselements ermöglicht werden, wenn die Endfläche von dem Durchführungsleiter gebildet wird und die Kontaktfläche von dem Verbindungsleiter gebildet wird. Außerdem kann das flächige Anliegen zur Gasdichtheit der Durchführung beitragen. Durch eine Schwenkbarkeit der Durchführungselemente beim flächigen Anliegen der Endflächen an den Kontaktflächen können fertigungstechnisch kaum vermeidbare kleinere Winkelversätze der Elementachsen der Durchführungselemente bei der Montage der Durchführung ausgeglichen werden.

Bei einer weiteren Ausgestaltung der Erfindung weist jedes Durchführungselement ein ringförmig um die Elementachse verlaufendes Abdichtelement auf, das einen Abschnitt der Außenoberfläche des Durchführungselements bildet. Zusätzlich kann jedes Durchführungselement eine ringförmig um die Elementachse verlaufende Druckhülse, die an einer dem zweiten Elementendabschnitt des Durchführungselements zugewandten Ende des Abdichtelements anliegt, und eine ringförmig um die Elementachse verlaufende Druckschraube, mit der auf die Druckhülse eine das Abdichtelement deformierende Kraft ausübbar ist, aufweisen.

Die Abdichtelemente ermöglichen vorteilhaft das Abdichten von Öffnungen, durch die Durchführungselemente geführt sind (entweder durch Gehäuseöffnungen oder Deckelöffnungen von Durchführungsdeckeln, siehe unten). Die Deformierung von Abdichtelementen durch Druckschrauben über Druckhülsen ermöglicht ein Abdichten der Öffnungen, indem die Öffnungen durch die Deformierung der Abdichtelemente verschlossen werden. Die Abdichtelemente sind beispielsweise aus Graphit gefertigt. Dies hat insbesondere den Vorteil, dass derartige Abdichtelemente Bewegungen der Durchführungselemente in den Öffnungen ermöglichen, insbesondere Bewegungen, die aufgrund thermischer Längenausdehnungen auftreten können.

Eine weitere Ausgestaltung der Erfindung sieht für jedes Durchführungselement einen Durchführungsdeckel vor, der eine Deckelöffnung aufweist, durch die das Durchführungselement geführt ist.

Durchführungsdeckel ermöglichen einerseits das Verschließen von Gehäuseöffnungen, durch die die Durchführungselemente geführt werden. Andererseits können sie verwendet werden, um Wirbelströme zu unterdrücken, die von den Strömen in den Durchführungsleitern verursacht werden können. Dazu werden die Durchführungsdeckel vorzugsweise aus einem nicht ferromagnetischen, korrosionsbeständigen Stahl gefertigt.

Bei einer weiteren Ausgestaltung der Erfindung weist der zweite Elementendabschnitt jedes Durchführungselements, das mindestens einen Durchführungsleiter aufweist, ein Anschlusselement auf, das zum elektrischen Kontaktieren des mindestens einen Durchführungsleiters des Durchführungselements ausgebildet ist.

Durch geeignete Anschlusselemente kann die elektrische Kontaktierung der Durchführung ermöglicht beziehungsweise erleichtert werden. Insbesondere können Anschlusselemente an gebräuchliche Gestaltungen elektrischer Kontakte wie Steck- oder Schraubverbindungen angepasst werden.

Eine erfindungsgemäße Maschinenanordnung umfasst ein Druckgehäuse, eine in dem Druckgehäuse angeordnete elektrische Maschine und eine erfindungsgemäße elektrische Durchführung. Das Druckgehäuse weist zwei Gehäuseöffnungen auf, durch die jeweils eines der Durchführungselemente der Durchführung geführt ist. Das Verbindungselement ist in dem Druckgehäuse angeordnet und mindestens ein Verbindungsleiter des Verbindungselements ist mit einer Maschinenkomponente der elektrischen Maschine elektrisch verbunden.

Wie oben bereits ausgeführt wurde, ermöglicht die Verwendung einer erfindungsgemäßen elektrischen Durchführung in ein Druckgehäuse eine vereinfachte Montage und Demontage der Durchführung und insbesondere einen zerstörungsfreien Ausbau der elektrischen Maschine, beispielsweise zu deren Reparatur, Wartung oder Austausch. Weitere Vorteile einer erfindungsgemäßen Maschinenanordnung ergeben sich aus den oben bereits genannten Vorteilen einer erfindungsgemäßen elektrischen Durchführung.

Bei einem erfindungsgemäßen Verfahren zur Herstellung einer erfindungsgemäßen Maschinenanordnung wird das Verbindungselement der Durchführung an der elektrischen Maschine angeordnet, wobei mindestens ein Verbindungsleiter des Verbindungselements mit einer Maschinenkomponente der elektrischen Maschine elektrisch verbunden wird. Die elektrische Maschine und das an ihr angeordnete Verbindungselement werden in dem Druckgehäuse angeordnet und anschließend werden die Durchführungselemente mit dem Verbindungselement verbunden. Das erfindungsgemäße Verfahren nutzt insbesondere die lösbare Verbindbarkeit der Durchführungselemente mit dem Verbindungselement aus, die es ermöglicht, die Durchführungselemente erst nach dem Verbinden des Verbindungselements mit der elektrischen Maschine und dem Einbau der elektrischen Maschine und des Verbindungselements in das Druckgehäuse zu montieren.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 eine Schnittdarstellung eines ersten Ausführungsbeispiels einer elektrischen Durchführung und eines Druckgehäuses,
FIG 2 einen Ausschnitt einer Schnittdarstellung der in Figur 1 gezeigten elektrischen Durchführung ohne Durchführungsdeckel,
FIG 3 eine Querschnittdarstellung eines Durchführungselements der in Figur 1 gezeigten elektrischen Durchführung,
FIG 4 eine Querschnittdarstellung eines Durchführungselements eines zweiten Ausführungsbeispiels einer elektrischen Durchführung,
FIG 5 schematisch eine Schnittdarstellung einer Maschinenanordnung mit einem Druckgehäuse, einer elektrischen Maschine und einer elektrischen Durchführung.

Einander entsprechende Teile sind in den Figuren mit denselben Bezugszeichen versehen.

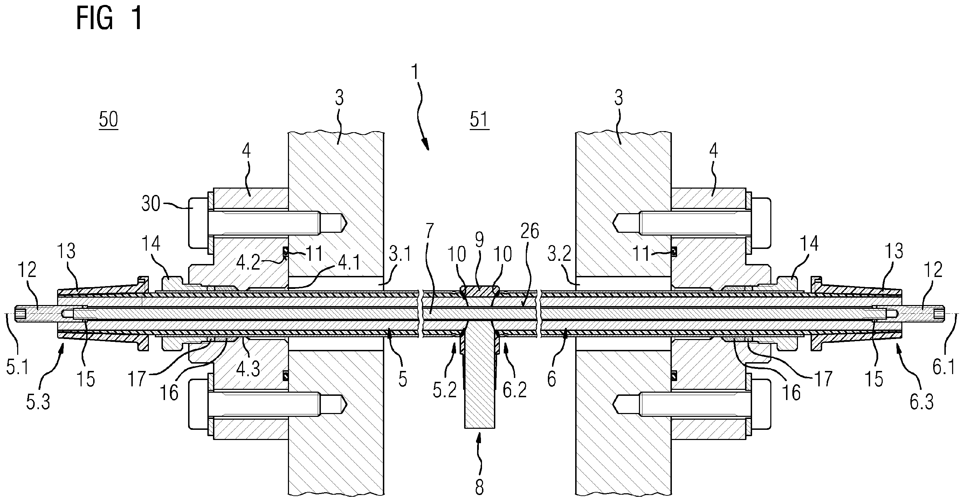

Figur 1 zeigt eine Schnittdarstellung eines ersten Ausführungsbeispiels einer elektrischen Durchführung 1 und eines Druckgehäuses 3. Die Durchführung 1 umfasst zwei Durchführungselemente 5, 6, Verspannelemente 7, 12, 15, ein Verbindungselement 8 und zwei Durchführungsdeckel 4. Jedes Durchführungselement 5, 6 erstreckt sich durch eine Gehäuseöffnung 3.1, 3.2 in dem Druckgehäuse 3 aus einer Umgebung 50 des Druckgehäuses 3 in das von dem Druckgehäuse 3 umgebene Gehäuseinnere 51 zu dem Verbindungselement 8, das in dem Gehäuseinneren 51 zwischen den beiden Durchführungselementen 5, 6 angeordnet ist. Die Durchführung 1 ist insbesondere dazu ausgebildet, die Gehäuseöffnungen 3.1, 3.2 druckdicht zu verschließen, um einen Druckausgleich zwischen der Umgebung 50 und dem Gehäuseinneren 51 zu verhindern, wenn in dem Gehäuseinneren 51 ein anderer, insbesondere ein höherer Druck als in der Umgebung 50 herrscht.

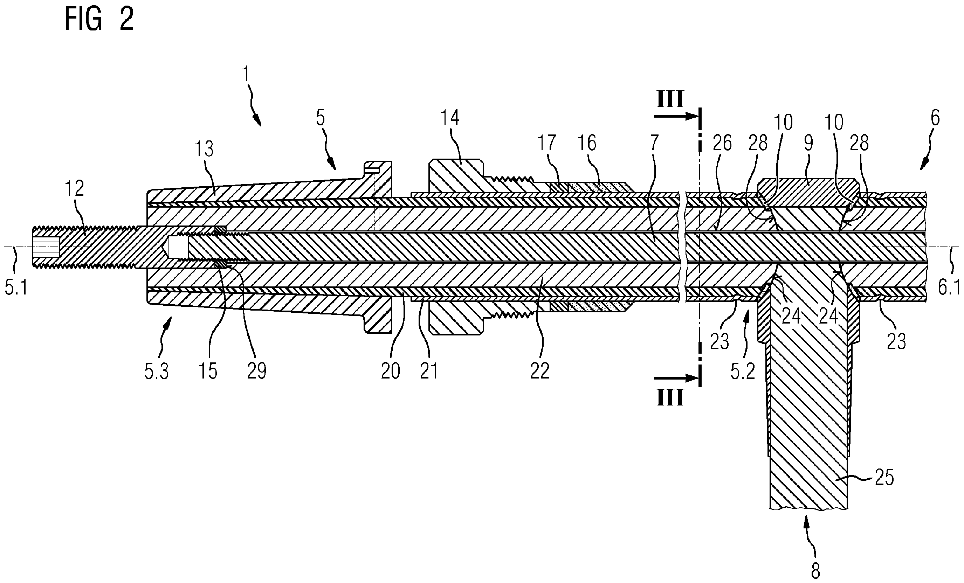

Figur 2 zeigt eine Schnittdarstellung der in Figur 1 gezeigten Durchführung 1 ohne Durchführungsdeckel 4.

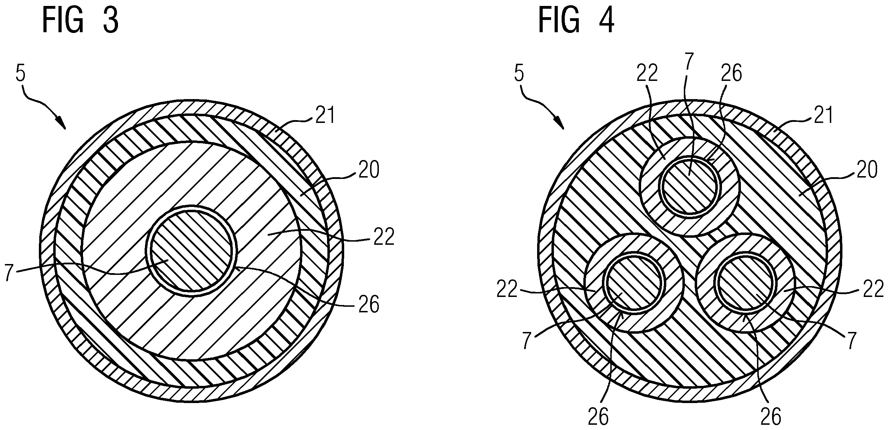

Figur 3 zeigt eine Querschnittdarstellung eines Durchführungselements 5 der in Figur 1 gezeigten Durchführung 1.

Die beiden Durchführungselemente 5, 6 der in Figur 1 gezeigten Durchführung 1 sind gleichartig ausgebildet. Jedes Durchführungselement 5, 6 verläuft gerade entlang einer Elementachse 5.1, 6.1 zwischen einem ersten Elementendabschnitt 5.2, 6.2, der an dem Verbindungselement 8 anliegt, und einem zweiten Elementendabschnitt 5.3, 6.3, der außerhalb des Druckgehäuses 3 angeordnet ist. Die Elementachsen 5.1, 6.1 fallen wenigstens annähernd zusammen, so dass die Durchführung 1 eine T-Form aufweist. Dadurch wird eine Kräftekompensation der Kräfte erreicht, die bei einer Druckdifferenz zwischen einem Druck in dem Gehäuseinneren 51 und einem Druck in der Umgebung 50 auf die Durchführung 1 wirken. Insbesondere wird verhindert, dass diese Kräfte eine Verschiebung der Durchführung 1 relativ zu dem Druckgehäuse 3 bewirken.

Jedes Durchführungselement 5, 6 weist einen elektrischen Durchführungsleiter 22, einen Isoliermantel 20 und ein Mantelrohr 21 auf. Der Durchführungsleiter 22, der Isoliermantel 20 und das Mantelrohr 21 jedes Durchführungselements 5, 6 sind als konzentrisch um die Elementachse 5.1, 6.1 des Durchführungselements 5, 6 verlaufende Rohre mit kreisringförmigen Querschnitten ausgebildet. Der Durchführungsleiter 22 und der Isoliermantel 20 eines jeden Durchführungselements 5, 6 erstrecken sich gleichweit von dem ersten Elementendabschnitt 5.2, 6.2 durch die jeweilige Gehäuseöffnung 3.1, 3.2 zu dem zweiten Elementendabschnitt 5.3, 6.3 des Durchführungselements 5, 6. Das Mantelrohr 21 des Durchführungselements 5, 6 erstreckt sich ebenfalls von dem ersten Elementendabschnitt 5.2, 6.2 durch die Gehäuseöffnung 3.1, 3.2 zu dem zweiten Elementendabschnitt 5.3, 6.3 hin, weist jedoch eine geringere Länge als der Durchführungsleiter 22 und der Isoliermantel 20 auf.

Ein Innendurchmesser des kreisringförmigen Querschnitts des Isoliermantels 20 eines Durchführungselements 5, 6 stimmt entlang des Verlaufs des Isoliermantels 20 mit einem Außendurchmesser des kreisringförmigen Querschnitts des Durchführungsleiters 22 des Durchführungselements 5, 6 überein, so dass eine Innenoberfläche des Isoliermantels 20 an einer Außenoberfläche des Durchführungsleiters 22 anliegt. Ein Innendurchmesser des kreisringförmigen Querschnitts des Mantelrohrs 21 eines Durchführungselements 5, 6 stimmt entlang des Verlaufs des Mantelrohrs 21 mit einem Außendurchmesser des kreisringförmigen Querschnitts des Isoliermantels 20 des Durchführungselements 5, 6 überein, so dass eine Innenoberfläche des Mantelrohrs 21 an einer Außenoberfläche des Isoliermantels 20 anliegt. Jedes Mantelrohr 21 kann mindestens eine Mantelrohrsicke 23 aufweisen, durch die der Innendurchmesser des kreisringförmigen Querschnitts des Mantelrohrs 21 lokal verkleinert ist, um die Dichtheit der Durchführungselemente 5, 6 gegen Gasströmungen in den Durchführungselementen 5, 6 zu erhöhen. Die Durchführungsleiter 22 sind aus einem elektrisch leitfähigen Material gefertigt, beispielsweise aus Kupfer oder Aluminium. Die Isoliermäntel 20 sind aus einem elektrisch isolierenden Material gefertigt, beispielsweise aus Polyetheretherketon. Die Mantelrohre 21 sind beispielsweise aus einem korrosionsbeständigen Stahl gefertigt.

Das Verbindungselement 8 weist einen elektrischen Verbindungsleiter 25 und eine den Verbindungsleiter 25 teilweise ummantelnde Isolierung 9 auf. Der Verbindungsleiter 25 ist aus einem elektrisch leitfähigen Material gefertigt, beispielsweise aus Kupfer oder Aluminium. Die Isolierung 9 ist aus einem elektrisch isolierenden Material gefertigt, beispielsweise aus Polyetheretherketon.

Die Durchführung 1 weist eine durch beide Durchführungselemente 5, 6 entlang deren Elementachsen 5.1, 6.1 und durch das Verbindungselement 8 verlaufende Durchführungsausnehmung 26 auf. Die Durchführungsausnehmung 26 wird im Bereich jedes Durchführungselements 5, 6 von der Innenoberfläche des Durchführungsleiters 22 berandet und zwischen den Durchführungselementen 5, 6 von einer Ausnehmung in dem Verbindungselement 8 gebildet.

Jedes Durchführungselement 5, 6 liegt mit einer Endfläche 28 seines ersten Elementendabschnitts 5.2, 6.2 flächig an einer von zwei Kontaktflächen 24 des Verbindungselements 8 an. Die Endfläche 28 wird von der dem Verbindungselement 8 zugewandten Stirnseite des Durchführungsleiters 22 gebildet. Die Kontaktflächen 24 sind an sich gegenüberliegenden Seiten des Verbindungselements 8 angeordnet und werden jeweils von einen Oberflächenabschnitt des Verbindungsleiters 25 gebildet, der durch eine Aussparung in der Isolierung 9 freigelegt ist. Jede Kontaktfläche 24 verläuft ringförmig um ein Ende der durch das Verbindungselement 8 verlaufenden Ausnehmung und korrespondiert zu der Endfläche 28 eines Durchführungselements 5, 6, so dass die Endfläche 28 flächig an der Kontaktfläche 24 anliegt. Durch das flächige Anliegen jeder Endfläche 28 an einer Kontaktfläche 24 werden gleichzeitig gute elektrische Kontakte zwischen den Durchführungsleitern 22 und dem Verbindungsleiter 25 ermöglicht und die Verbindungen der Durchführungselemente 5, 6 mit dem Verbindungselement 8 gegen einen Gasfluss aus dem Gehäuseinneren 51 in die Durchführungsausnehmung 26 abgedichtet.

Die Endflächen 28 und die Kontaktflächen 24 sind ferner vorzugsweise derart gestaltet, dass jede Endfläche 28 eines Durchführungselements 5, 6 um mindestens eine zu der Elementachse 5.1, 6.1 des Durchführungselements 5, 6 senkrechte Achse schwenkbar an einer Kontaktfläche 24 anlegbar ist. Beispielsweise haben die Endflächen 28 und Kontaktflächen 24 jeweils die Form einer Kugelsegmentoberfläche mit einer von der Durchführungsausnehmung 26 gebildeten Aussparung. Dadurch können fertigungstechnisch kaum vermeidbare kleinere Winkelversätze zwischen einer Achse der Ausnehmung in dem Verbindungselement 8 und den Elementachsen 5.1, 6.1 der Durchführungselemente 5, 6 unter Beibehaltung der flächigen Kontakte der Endflächen 28 mit je einer Kontaktfläche 24 ausgeglichen werden. Zum Formen der Endflächen 28 werden die Durchführungsleiter 22 im Bereich der Endflächen 28 beispielsweise in einem Herstellungsprozess weichgeglüht, um eine gute plastische Formbarkeit zu erreichen. Alternativ kann beispielsweise jeweils eine separate Metalldichtung zwischen ein verbindungselementseitiges Ende eines Durchführungsleiters 22 und eine Kontaktfläche 24 eingesetzt werden.

Zwischen der verbindungselementseitigen Stirnseite des Isoliermantels 20 eines jeden Durchführungselements 5, 6 und dem angrenzenden Bereich der Isolierung 9 des Verbindungselements 8 ist eine Isolierdichtung 10 angeordnet, die ringförmig um den Durchführungsleiter 22 des Durchführungselements 5, 6 verläuft. Die Isolierdichtungen 10 verbinden die Isoliermäntel 20 mit der Isolierung 9 und tragen dadurch vorrangig zur elektrischen Isolation der Durchführung 1 bei. Außerdem tragen die Isolierdichtungen 10 zur Abdichtung der Verbindungen der Durchführungselemente 5, 6 mit dem Verbindungselement 8 gegen einen Gaseintritt bei. Die Isolierdichtungen 10 können separat ausgeführt oder integrale Bestandteile der Durchführungsleiter 22 oder des Verbindungselements 8 sein.

Die Verspannelemente 7, 12, 15 umfassen eine Zugstange 7, Schraubelemente 12 und Klemmelemente 15. Die Zugstange 7 ist in der Durchführungsausnehmung 26 angeordnet und erstreckt sich zwischen den zweiten Elementendabschnitten 5.3, 6.3 der beiden Durchführungselemente 5, 6. Die Zugstange 7 hat einen kreisförmigen Querschnitt, der einen kleineren Durchmesser als die Durchführungsausnehmung 26 hat. Dadurch kann die Zugstange 7 auch bei kleineren Winkelversätzen zwischen der Achse der Ausnehmung in dem Verbindungselement 8 und den Elementachsen 5.1, 6.1 der Durchführungselemente 5, 6 in der Durchführungsausnehmung 26 angeordnet werden. Die Zugstange 7 ist beispielsweise aus einem Stahl gefertigt.

Jeder Endabschnitt der Zugstange 7 weist ein Außengewinde auf, um den Endabschnitt mit einem Schraubelement 12 zu verschrauben. Die Schraubelemente 12 weisen jeweils eine Ausnehmung mit einem Innengewinde auf, das zu einem Außengewinde der Zugstange 7 korrespondiert. Jedes Klemmelement 15 verläuft im Bereich eines Endabschnitts der Zugstange 7 ringförmig um die Zugstange 7 und wird durch das Verschrauben eines Schraubelements 12 mit dem Endabschnitt der Zugstange 7 von dem Schraubelement 12 an eine Anschlagfläche 29 gedrückt, die in der Innenoberfläche eines Durchführungsleiters 22 ringförmig um die jeweilige Elementachse 5.1, 6.1 ausgebildet ist und senkrecht auf der Elementachse 5.1, 6.1 steht. Zwischen der Anschlagfläche 29 und dem von dem Verbindungselement 8 abgewandten Ende eines Durchführungsleiters 22 weist der kreisringförmige Querschnitt des Durchführungsleiters 22 einen größeren Innendurchmesser als zwischen der Anschlagfläche 29 und dem Verbindungselement 8 auf, um die Einführung eines Schraubelements 12 in den Durchführungsleiter 22 zu ermöglichen.

Durch das Andrücken der Klemmelemente 15 jeweils an die Anschlagfläche 29 eines Durchführungsleiters 22 beim Verschrauben der Endabschnitte der Zugstange 7 mit jeweils einem Schraubelement 12 werden die Durchführungsleiter 22 kraftschlüssig mit der Zugstange 7 verbunden. Dadurch werden die Durchführungselemente 5, 6 mit dem Verbindungselement 8 verspannt und insbesondere die Endflächen 28 der Durchführungsleiter 22 jeweils an eine Kontaktfläche 24 des Verbindungselements 8 gedrückt. Die Schraubelemente 12 realisieren somit eine lösbare Verbindung der Durchführungselemente 5, 6 mit dem Verbindungselement 8 über die Zugstange 7, wodurch die Montage und Demontage der Durchführung 1 vereinfacht wird.

Jeder Durchführungsdeckel 4 weist eine Deckelöffnung 4.1 auf, durch ein Durchführungselement 5, 6 geführt ist, und verschließt eine Gehäuseöffnung 3.1, 3.2. Die Durchführungsdeckel 4 werden jeweils durch Schrauben 30 an einer Außenseite des Druckgehäuses 3 befestigt. Eine an dem Druckgehäuse 3 anliegende Außenoberfläche jedes Durchführungsdeckels 4 weist eine ringförmig um die Deckelöffnung 4.1 verlaufende Vertiefung 4.2 auf, in der ein Dichtring 11 angeordnet ist, um die Verbindung der Außenoberfläche des Durchführungsdeckels 4 mit dem Druckgehäuse 3 abzudichten. Die Durchführungsdeckel 4 sind beispielsweise aus einem nicht ferromagnetischen, korrosionsbeständigen Stahl gefertigt. Ein nicht ferromagnetisches Material ist vorteilhaft, um Wirbelströme in den Durchführungsdeckeln 4 weitgehend zu vermeiden. Die Verwendung eines korrosionsbeständigen Stahls reduziert vorteilhaft die Beeinträchtigung der Durchführungsdeckel 4 durch Korrosion.

Um eine Deckelöffnung 4.1 um ein Durchführungselement 5, 6 herum abzudichten, weist das Durchführungselement 5, 6 ein Abdichtelement 16, eine Druckhülse 17 und eine Druckschraube 14 auf, die hineinander an der Außenoberfläche des Mantelrohrs 21 angeordnet sind und jeweils ringförmig um die Elementachse 5.1, 6.2 des Durchführungselements 5, 6 verlaufen. Das Abdichtelement 16 ist plastisch verformbar. Das Abdichtelement 16 ist in der Deckelöffnung 4.1 angeordnet, die Druckhülse 17 ist zwischen dem Abdichtelement 16 und der Druckschraube 14 angeordnet und die Druckschraube 14 ragt zu dem zweiten Elementendabschnitt 5.3, 6.3 des Durchführungselements 5, 6 hin aus der Deckelöffnung 4.1 heraus. Die Deckelöffnung 4.1 weist eine an das Abdichtelement 16 grenzende Öffnungsverengung 4.3 auf, an der sich ein Durchmesser der Deckelöffnung 4.1 auf den Außendurchmesser des kreisringförmigen Querschnitts des Mantelrohrs 21 verengt und die eine Verschiebung und Verformung des Abdichtelements 16 begrenzt. Die Druckschraube 14 ist in das Druckgehäuse 3 einschraubbar. Durch das Einschrauben wird mit der Druckschraube 14 eine Kraft auf die Druckhülse 17 ausgeübt, die über die Druckhülse 17 auf das Abdichtelement 16 wirkt und dieses verformt bis das Abdichtelement 16 einen durch die Öffnungsverengung 4.3 und die Druckhülse 17 begrenzten Dichtraum vollständig ausfüllt.

Die Abdichtelemente 16 sind beispielsweise aus Graphit gefertigt. Dies ermöglicht vorteilhaft insbesondere Bewegungen der Durchführungselemente 5, 6, die aufgrund thermischer Längenausdehnungen auftreten können.

Der zweite Elementendabschnitt 5.3, 6.3 jedes Durchführungselements 5, 6 weist ein Anschlusselement 13 auf, das zum elektrischen Kontaktieren des Durchführungsleiters 22 des Durchführungselements 5, 6 ausgebildet ist. Die in den Figuren 1 und 2 gezeigten Anschlusselemente 13 sind jeweils als ein ringförmig um den Isoliermantel 20 des Durchführungselements 5, 6 verlaufender Isolierkörper ausgebildet, der sich zum Ende des Isoliermantels 20 konisch verengt (das Mantelrohr 21 jedes Durchführungselements 5, 6 endet zwischen dem Anschlusselement 13 und der Druckschraube 14 des Durchführungselements 5, 6). Beispielsweise hat der Isolierkörper Abmessungen gemäß der Norm DIN 50180-1. Alternativ können jedoch auch andere Anschlusselemente 13 verwendet werden, beispielsweise als Steckerelemente ausgebildete Anschlusselemente 13.

Figur 4 zeigt eine Querschnittdarstellung eines Durchführungselements 5 eines zweiten Ausführungsbeispiels einer Durchführung 1. Dieses Ausführungsbeispiel unterscheidet sich von dem in den Figuren 1 bis 3 gezeigten Ausführungsbeispiel dadurch, dass jedes Durchführungselement 5, 6 drei Durchführungsleiter 22 aufweist, die durch einen gemeinsamen Isoliermantel 20 geführt sind und jeweils als ein Rohr mit einem kreisringförmigen Querschnitt ausgebildet sind. Entsprechend weist das Verbindungselement 8 drei Verbindungsleiter 25 auf, die gegeneinander elektrisch isoliert sind und jeweils mit einem Durchführungsleiter 22 jedes Durchführungselements 5, 6 verbunden sind. Ferner weist die Durchführung 1 drei Zugstangen 7 und drei Durchführungsausnehmungen 26 auf, die jeweils durch einen rohrartigen Durchführungsleiter 22 jedes Durchführungselements 5, 6 verlaufen.

Die anhand der Figuren 1 bis 4 beschriebenen Ausführungsbeispiele einer erfindungsgemäßen Durchführung 1 können auf verschiedene Weise zu weiteren Ausführungsbeispielen abgewandelt werden. Beispielsweise kann in dem anhand von Figur 4 beschriebenen Ausführungsbeispiel statt dreier Zugstangen 7, die jeweils durch einen rohrartigen Durchführungsleiter 22 jedes Durchführungselements 5, 6 verlaufen, nur eine Zugstange 7 vorgesehen sein, die entweder durch einen rohrartigen Durchführungsleiter 22 jedes Durchführungselements 5, 6 oder durch die Isoliermäntel 20 der beiden Durchführungselement 5, 6 verläuft (im letzteren Fall können die Durchführungsleiter 22 massiv statt als Rohre ausgeführt sein und die Zugstange 7 kann mittig zwischen den Durchführungsleitern 22 durch den Isoliermantel 20 jedes Durchführungselements 5, 6 geführt sein). Auch das anhand der Figuren 1 bis 3 beschriebene Ausführungsbeispiel kann dahingehend abgewandelt werden, dass die Zugstange 7 nicht durch die Durchführungsleiter 22 sondern durch die Isoliermäntel 20 der Durchführungselemente 5, 6 geführt wird (auch in diesem Fall können die Durchführungsleiter 22 massiv statt als Rohre ausgeführt sein). Ferner kann vorgesehen sein, einen gemeinsamen Durchführungsdeckel 4 und eine gemeinsame Gehäuseöffnung 3.1, 3.2 für mehrere Durchführungselemente 5, 6 vorzusehen (in diesem Fall weist ein Durchführungsdeckel 4 mehrere Deckelöffnungen 4.1 für jeweils ein Durchführungselement 5, 6 auf).

Alle bisher genannten Ausführungsbeispiele können weiterhin dahingehend abgewandelt werden, dass keine Durchführungsdeckel 4 vorgesehen sind, sondern jede Gehäuseöffnung 3.1, 3.2 um das Durchführungselement 5, 6 herum direkt verschlossen und abgedichtet wird, beispielsweise jeweils mit einem Abdichtelement 16, einer Druckhülse 17 und einer Druckschraube 14 analog zu den Deckelöffnungen 4.1 gemäß den Figuren 1 und 2. Dies kann insbesondere sinnvoll sein, wenn das Druckgehäuse 3 aus einem nicht ferromagnetischen Material gefertigt ist.

Ferner kann vorgesehen sein, dass nur eines der beiden Durchführungselemente 5, 6 dazu ausgestaltet ist, elektrisch kontaktiert zu werden. In diesem Fall braucht das andere Durchführungselement 5, 6 beispielsweise kein Anschlusselement 13 aufzuweisen. Es kann sogar vorgesehen sein, dass das andere Durchführungselement 5, 6 keinen Durchführungsleiter 22 und dementsprechend auch keinen Isoliermantel 20 aufweist, wobei die äußere Form und die äußeren Abmessungen der beiden Durchführungselemente 5, 6 jedoch auch dann im Wesentlichen übereinstimmen, um die oben genannte Kräftekompensation zu ermöglichen.

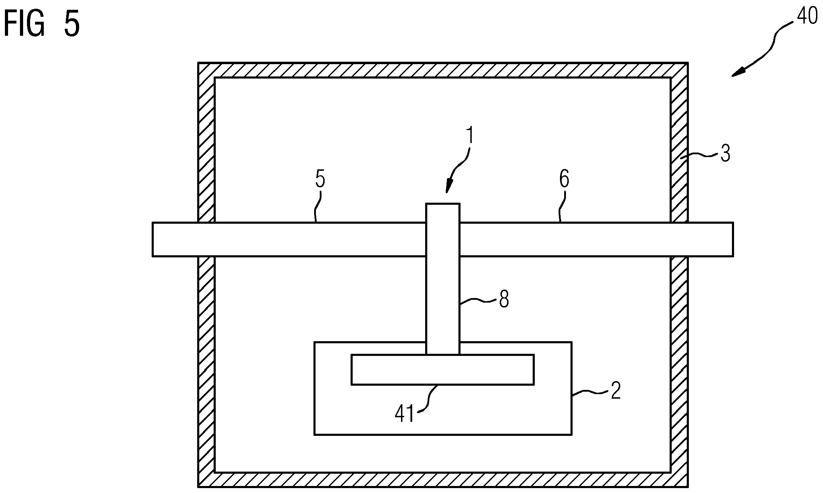

Figur 5 zeigt schematisch eine Schnittdarstellung eines Ausführungsbeispiels einer erfindungsgemäßen Maschinenanordnung 40. Die Maschinenanordnung 40 umfasst ein Druckgehäuse 3, eine in dem Druckgehäuse 3 angeordnete elektrische Maschine 2 und eine wie in den Figuren 1 bis 3 ausgeführte elektrische Durchführung 1. Die Durchführungselemente 5, 6 der Durchführung 1 sind durch jeweils eine Gehäuseöffnung 3.1, 3.2 geführt und mit dem Verbindungselement 8 der Durchführung 1 verbunden. Der Verbindungsleiter 25 des Verbindungselements 8 ist mit einer Maschinenkomponente 41 der elektrischen Maschine 2 elektrisch verbunden. Die elektrische Maschine 2 ist ein elektrischer Motor, Generator oder Transformator. Die Maschinenkomponente 41 ist beispielsweise eine Maschinenwicklung der elektrischen Maschine 2, z. B. eine Statorwicklung oder Rotorwicklung im Falle, dass die elektrische Maschine 2 ein elektrischer Motor oder Generator ist, oder eine Primär- oder Sekundärwicklung im Falle, dass die elektrische Maschine 2 ein Transformator ist.

Bei der Herstellung der Maschinenanordnung 40 wird zunächst das Verbindungselement 8 der Durchführung 1 an der elektrischen Maschine 2 angeordnet. Dabei wird der Verbindungsleiter 25 des Verbindungselements 8, beispielsweise durch Hartlöten, mit der Maschinenkomponente 41 elektrisch verbunden und anschließend wird ein Isoliersystem der elektrischen Maschine 2 mit der Isolierung 9 des Verbindungselements 8 verbunden, beispielsweise durch Bewickeln mit Glimmerband und anschließendes Imprägnieren mit einem Kunstharz in einem so genannten VPI (= Vacuum Pressure Impregnation)-Verfahren. Danach werden die elektrische Maschine 2 und das an ihr angeordnete Verbindungselement 8 in dem Druckgehäuse 3 angeordnet. Abschließend werden die Durchführungselemente 5, 6 mittels der Verspannelemente 7, 12, 15 mit dem Verbindungselement 8 verbunden. Zur Reparatur, Wartung oder zum Austausch der elektrischen Maschine 2 können zunächst die Durchführungselemente 5, 6 wieder demontiert werden und anschließend kann die elektrische Maschine 2 dem Druckgehäuse 3 entnommen werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Durchführung (1) für ein Druckgehäuse (3), die elektrische Durchführung (1) umfassend
- zwei Durchführungselemente (5, 6), die jeweils gerade entlang einer Elementachse (5.1, 6.1) zwischen einem ersten Elementendabschnitt (5.2, 6.2) und einem zweiten Elementendabschnitt (5.3, 6.3) verlaufen und deren äußere Form und Abmessungen im Wesentlichen übereinstimmen, und
- ein Verbindungselement (8), das an sich gegenüberliegenden Seiten jeweils eine Kontaktfläche (24) für einen ersten Elementendabschnitt (5.2, 6.2) eines Durchführungselements (5, 6) aufweist und mit den Durchführungselementen (5, 6) lösbar verbunden ist, wobei
- an jeder Kontaktfläche (24) der erste Elementendabschnitt (5.2, 6.2) eines Durchführungselements (5, 6) anliegt,
- das Verbindungselement (8) mindestens einen elektrischen Verbindungsleiter (25) aufweist und
- mindestens ein Durchführungselement (5, 6) für jeden Verbindungsleiter (25) einen elektrischen Durchführungsleiter (22) aufweist, der entlang der Elementachse (5.1, 6.1) des Durchführungselements (5, 6) verläuft und an dem Verbindungsleiter (25) anliegt.

2. Durchführung (1) nach Anspruch 1, wobei die Elementachsen (5.1, 6.1) der beiden Durchführungselemente (5, 6) wenigstens annähernd kollinear sind.

3. Durchführung (1) nach Anspruch 1 oder 2, wobei die Durchführungselemente (5, 6) mit dem Verbindungselement (8) durch mindestens ein Verspannelement (7, 12, 15), das die Durchführungselemente (5, 6) mit dem Verbindungselement (8) lösbar verspannt, lösbar verbunden sind.

4. Durchführung (1) nach Anspruch 2 mit mindestens einem als eine Zugstange (7) ausgebildeten Verspannelement und für jede Zugstange (7) einer durch beide Durchführungselemente (5, 6) und das Verbindungselement (8) verlaufenden Durchführungsausnehmung (26), in die die Zugstange (7) eingeführt ist, wobei jede Zugstange (7) kraftschlüssig mit einem Durchführungselement (5, 6) verbunden ist.

5. Durchführung (1) nach Anspruch 4, wobei mindestens ein Durchführungsleiter (22) als ein Rohr ausgebildet ist, durch das eine Zugstange (7) geführt ist.

6. Durchführung (1) nach einem der vorhergehenden Ansprüche, wobei jeder Durchführungsleiter (22) elektrisch isoliert in einem Durchführungselement (5, 6) geführt ist.

7. Durchführung (1) nach einem der vorhergehenden Ansprüche, wobei jedes Durchführungselement (5, 6), das mindestens einen Durchführungsleiter (22) aufweist, ein Mantelrohr (21) aufweist, in dem der mindestens eine Durchführungsleiter (22) geführt ist.

8. Durchführung (1) nach einem der vorhergehenden Ansprüche, wobei Endflächen (28) der ersten Elementendabschnitte (5.2, 6.2) der Durchführungselemente (5, 6) und die Kontaktflächen (24) des Verbindungselements (8) derart gestaltet sind, dass jede Endfläche (28) flächig an einer Kontaktfläche (24) anliegt.

9. Durchführung (1) nach Anspruch 8, wobei die Endflächen (28) der ersten Elementendabschnitte (5.2, 6.2) der Durchführungselemente (5, 6) und die Kontaktflächen (24) des Verbindungselements (8) derart gestaltet sind, dass jedes Durchführungselement (5, 6) bei einem flächigen Kontakt der Endfläche (28) mit einer Kontaktfläche (24) um mindestens eine zu der Elementachse (5.1, 6.1) senkrechte Achse relativ zu dem Verbindungselement (8) schwenkbar ist.

10. Durchführung (1) nach einem der vorhergehenden Ansprüche, wobei jedes Durchführungselement (5, 6) ein ringförmig um die Elementachse (5.1, 6.1) verlaufendes Abdichtelement (16) aufweist, das einen Abschnitt der Außenoberfläche des Durchführungselements (5, 6) bildet.

11. Durchführung (1) nach Anspruch 10, wobei jedes Durchführungselement (5, 6) eine ringförmig um die Elementachse (5.1, 6.1) verlaufende Druckhülse (17), die an einer dem zweiten Elementendabschnitt (5.3, 6.3) des Durchführungselements (5, 6) zugewandten Ende des Abdichtelements (16) anliegt, und eine ringförmig um die Elementachse (5.1, 6.1) verlaufende Druckschraube (14), mit der auf die Druckhülse (17) eine das Abdichtelement (16) deformierende Kraft ausübbar ist, aufweist.

12. Durchführung (1) nach einem der vorhergehenden Ansprüche, die für jedes Durchführungselement (5, 6) einen Durchführungsdeckel (4) aufweist, der eine Deckelöffnung (4.1) aufweist, durch die das Durchführungselement (5, 6) geführt ist.

13. Durchführung (1) nach einem der vorhergehenden Ansprüche, wobei der zweite Elementendabschnitt (5.3, 6.3) jedes Durchführungselements (5, 6), das mindestens einen Durchführungsleiter (22) aufweist, ein Anschlusselement (13) aufweist, das zum elektrischen Kontaktieren des mindestens einen Durchführungsleiters (22) des Durchführungselements (5, 6) ausgebildet ist.

14. Maschinenanordnung (40), umfassend
- ein Druckgehäuse (3),
- eine in dem Druckgehäuse (3) angeordnete elektrische Maschine (2) und
- eine elektrische Durchführung (1) nach einem der vorhergehenden Ansprüche, wobei
- das Druckgehäuse (3) zwei Gehäuseöffnungen (3.1, 3.2) aufweist, durch die jeweils eines der Durchführungselemente (5, 6) der Durchführung (1) geführt ist,
- das Verbindungselement (8) ist in dem Druckgehäuse (3) angeordnet ist und
- mindestens ein Verbindungsleiter (25) des Verbindungselements (8) mit einer Maschinenkomponente (41) der elektrischen Maschine (2) elektrisch verbunden ist.

15. Verfahren zur Herstellung einer Maschinenanordnung (40) nach Anspruch 14, wobei
- das Verbindungselement (8) der Durchführung (1) an der elektrischen Maschine (2) angeordnet wird, wobei mindestens ein Verbindungsleiter (25) des Verbindungselements (8) mit einer Maschinenkomponente (41) der elektrischen Maschine (2) elektrisch verbunden wird,
- die elektrische Maschine (2) und das an ihr angeordnete Verbindungselement (8) in dem Druckgehäuse (3) angeordnet werden
- und anschließend die Durchführungselemente (5, 6) mit dem Verbindungselement (8) verbunden werden.
